# EUROPÄISCHE PATENTSCHRIFT

(11) **EP 4 438 936 B1**
(45) Veröffentlichungstag und Bekanntmachung des Hinweises auf die Patenterteilung: **30.04.2025**
(21) Anmeldenummer: 23164833.8
(22) Anmeldetag: 28.03.2023
(51) Int. Cl.: F16P 3/14

(54) **VALIDIEREN VON SCHUTZFELDERN**
VALIDATING PROTECTION FIELDS
VALIDATION DE CHAMPS DE PROTECTION

(43) Veröffentlichungstag der Anmeldung: 02.10.2024
(73) Patentinhaber: SICK AG, 79183 Waldkirch (DE)
(72) Erfinder: Hammes, Dr. Markus, 79117 Freiburg (DE); Hofmann, Dr. Christoph, 79108 Freiburg (DE)

(56) Entgegenhaltungen:
- EP-A1- 4 000 815
- WO-A1-2013/033747
- DE-A1- 10 000 287
- DE-U1- 202020 106 491

## Beschreibung

Die Erfindung betrifft ein System mit mindestens einem sicheren Sensor zur Überwachung mindestens eines Schutzfeldes, einer handgehaltenen Prüfvorrichtung zum Validieren des Schutzfeldes und einer Visualisierungsvorrichtung zum Anzeigen des Schutzfeldes sowie ein Verfahren zum Validieren von Schutzfeldern nach dem Oberbegriff von Anspruch 1 beziehungsweise 14.

Das primäre Ziel der Sicherheitstechnik ist, Personen vor Gefahrenquellen zu schützen, wie sie beispielsweise Maschinen im industriellen Umfeld darstellen. Die Maschine wird mit Hilfe von Sensoren überwacht, und wenn demnach eine Situation vorliegt, in der eine Person gefährlich nahe an die Maschine zu gelangen droht, wird eine geeignete Absicherungsmaßnahme ergriffen. In der Sicherheitstechnik eingesetzte Sensoren müssen besonders zuverlässig arbeiten und deshalb hohe Sicherheitsanforderungen erfüllen, beispielsweise die Norm EN ISO 13849 für Maschinensicherheit und die Gerätenorm EN/IEC 61496 für berührungslos wirkende Schutzeinrichtungen (BWS). Zur Erfüllung dieser Sicherheitsnormen sind eine Reihe von Maßnahmen zu treffen, wie sichere elektronische Auswertung durch redundante, diversitäre Elektronik, Funktionsüberwachung oder Überwachung der Verschmutzung optischer Bauteile.

Um die Sicherheit für Personen in der Umgebung der Maschine zu gewährleisten, überwacht ein Sensor in vielen Fällen ein Schutzfeld, das während des Betriebs der Maschine nicht betreten werden darf. Erkennt der Sensor einen unzulässigen Schutzfeldeingriff durch ein Objekt, so wird die Maschine in einen sicheren Zustand überführt. Einem Schutzfeld ist dabei eine bestimmte kleinste Auflösung zugeordnet, bis zu der Objekte verlässlich erfasst werden, meist an anthropometrische Daten geknüpft, beispielsweise eine Auflösung von 14 mm für die Erkennung von Fingern. Diese Vorgabe wird hier als Schutzart bezeichnet, im genannten Beispiel ist das Schutzfeld für Fingerschutz ausgelegt.

Schutzfelder werden in der Regel von Hand konfiguriert, oder es werden (teil-)automatisierte Konfigurationsvorschläge von einem Sicherheitsexperten überprüft. Die Sicherheitsnormen verlangen vor der Inbetriebnahme der Anlage einen Test, ob die Schutzfelder wie vorgesehen auf Objekte reagieren und ob eine geforderte Reaktionszeit der Auslösung eingehalten ist. Für diese Validierung der Schutzfelder wird ein normkonformes Prüfobjekt verwendet, häufig ein zylindrischer Prüfstab, dessen Abmessungen der Auflösung entsprechen. Ein Prüfobjekt für das obige Beispiel Fingerschutz weist demnach einen Durchmesser von 14 mm auf.

Der Sensor nutzt für die berührungslose Überwachung ein für den Menschen unsichtbares Wirkprinzip, bei dem beispielsweise Infrarotlicht oder Radarwellen ausgewertet werden. Dementsprechend ist kaum nachzuvollziehen, wo die Grenzen eines Schutzfeldes im Raum liegen. Dadurch wird eine Validierung sehr erschwert.

Die EP 3 974 936 A1 befasst sich mit dem Konfigurieren einer Visualisierungsvorrichtung für einen Maschinenbereich, in dem mindestens ein Sensor angeordnet ist. Dazu werden Referenzmarker des Maschinenbereichs und Objektmarker der Sensoren paarweise erfasst und miteinander in geometrische Beziehung gesetzt. In einer auf die Konfiguration folgenden Betriebsphase wird ein Referenzmarker in der Nähe aufgenommen, an dem sich die Visualisierungsvorrichtung orientiert, um Sensorinformationen in der Umgebung ortsrichtig anzuzeigen, zu denen auch ein Schutzfeld gehören kann. Mit der Validierung von Schutzfeldern beschäftigt sich die EP 3 974 936 A1 aber nicht.

In der EP 4 000 815 A1 wird eine Visualisierungsvorrichtung für mindestens ein Schutzfeld eines sicheren Sensors beschrieben, der mitbewegt an einem beweglichen Maschinenteil einer Maschine angebracht ist. Es werden Transformationen vorgestellt, um die Darstellung des Schutzfeldes an die Pose des Sensors bezüglich der Visualisierungsvorrichtung anzupassen, mit anderen Worten das Schutzfeld trotz der Mitbewegung des Sensors in der richtigen Lage und Orientierung anzuzeigen. Auch in der EP 3 974 936 A1 spielt eine Validierung von Schutzfeldern keine Rolle.

Die DE 10 2017 103 568 C5 offenbart einen sicheren Sensor, der mittels Ultraschalls eine berührungslos erzeugte haptische Rückmeldung über eine Eigenschaft des Sensors oder ein Ergebnis von dessen Erfassung von Objekten an einen Benutzer ausgibt. In einer Ausführungsform handelt es sich bei der Eigenschaft des Sensors um ein Schutzfeld. Der Benutzer kann durch die Rückmeldung die Grenze des Schutzfeldes mit der bloßen Hand fühlen. Das ist ein gewisser haptischer Ersatz für eine Visualisierung von Schutzfeldern. Validiert werden sie so nicht. Es wäre auch widersinnig, im Zusammenhang mit der DE 10 2017 103 568 C5 einen Prüfstab zu verwenden, weil die recht subtile haptische Rückmeldung nur an einem Körperteil funktioniert.

Die EP 2 048 557 B1 offenbart ein Handgerät zum Konfigurieren von Schutzfeldern eines optoelektronischen Sensor. Das Handgerät wird direkt im Raum an Positionen verbracht, die für das Schutzfeld konfiguriert werden sollen, beispielsweise an dessen Ecken, und in der jeweiligen Position von dem Sensor erkannt. Um sicherzustellen, dass die zu konfigurierende Position von dem Sensor mit hinreichender Auflösung erfasst wird, ist an dem Handgerät eine Kugel mit entsprechenden Abmessungen angebracht. Dabei kann das Handgerät in einer Ausführungsform eine Anzeige aufweisen, insbesondere einen Anschluss für eine Datenbrille, damit sich der Benutzer bei der Konfiguration und Überprüfung der Schutzfelder ein besonders intuitives und realistisches Bild machen kann. Überprüfung ist hier in dem Sinne zu verstehen, dass das konfigurierte Schutzfeld nochmals in Augenschein genommen wird. Eine Validierung im Sinne gezielter Schutzfeldauslösungen ist nicht angesprochen. Die Kugel könnte prinzipiell als Ersatz für einen Prüfstab verwendet werden, aber das wird nicht vorgeschlagen und wäre äußerst unpraktisch, weil dann die Anzeige des Handgeräts jeweils kaum noch oder gar nicht mehr eingesehen werden kann, während das Handgerät in das Schutzfeld eingebracht wird. Auch aus Kostengründen ist die mechanische Kopplung von Handgerät und Prüfstab ausgesprochen ungünstig, weil dies eine Sonderentwicklung verlangt.

Aus der EP 2 790 040 B1 ist ein System zur Konfiguration eines Überwachungsbereichs eines Laserscanners bekannt. Dabei wird eine Sequenzerzeugungseinheit an eine zu konfigurierende Position im Raum gestellt, die dann aktiv mit eigener Lichtquelle oder passiv durch Remission des Scanstrahls eine optische Sequenz erzeugt. Die optische Sequenz wird von dem Laserscanner erkannt und als Konfigurationsanweisung verstanden. Die Sequenzerzeugungseinheit ist wesentlich kostenträchtiger als ein einfacher Prüfstab. Außerdem wird sie zum Konfigurieren, nicht aber zum Validieren von Schutzfeldern verwendet.

Die DE 100 00 287 A1 befasst sich mit der Überwachung eines Erfassungsbereichs an einem Arbeitsmittel. Sicherheitskritische Objekte innerhalb einer Schutzzone werden anhand eines Referenzbildvergleichs und/oder einer Farbmerkmalsanalyse erkannt. Der Schutzzone kann eine Warnzone vorgelagert sein, wobei in einer Ausführungsform nach Art einer Verkehrsampel angezeigt wird, ob derzeit Eingriffe in die Schutzzone oder die Warnzone vorliegen. Außerdem wird an anderer Stelle ein dynamischer Selbsttest zur Funktionsüberprüfung vorgeschlagen, bei dem zu vorgegebenen Zeiten ein definiertes Testobjekt in der Schutzzone erkannt werden muss.

Es ist daher Aufgabe der Erfindung, die Inbetriebnahme eines sicheren Sensors zur Überwachung eines Schutzfeldes weiter zu vereinfachen.

Diese Aufgabe wird durch ein System mit mindestens einem sicheren Sensor zur Überwachung mindestens eines Schutzfeldes, einer handgehaltenen Prüfvorrichtung zum Validieren des Schutzfeldes und einer Visualisierungsvorrichtung zum Anzeigen des Schutzfeldes sowie ein Verfahren zum Validieren von Schutzfelderm nach Anspruch 1 beziehungsweise 14 gelöst. Ein Schutzfeld ist ein durch eine 2D-oder 3D-Geomtrie konfigurierter oder definierter Teilbereich des Erfassungsbereichs des sicheren Sensors. Der sichere Sensor erkennt, wie einleitend beschrieben, Objekteingriffe in das Schutzfeld und ist dafür ausgebildet, in diesem Fall ein sicherheitsgerichtetes Ausgangssignal für eine überwachte Maschine auszugeben. Dazu weist der sichere Sensor vorzugsweise einen sicheren Ausgang auf, der beispielsweise zweikanalig ausgelegt ist (OSSD, Output Signal Switching Device). In der Betriebsphase sorgt das sichere Ausgangssignal dafür, dass eine Unfallgefahr beseitigt wird, indem die Maschine ausweicht, verlangsamt oder anhält. Es ist möglich, dass mehrere Sensoren vorgesehen sind, um einen größeren Überwachungsbereich abzudecken oder durch überlappende Überwachung Redundanz zu schaffen und Abschattungen zu vermeiden, wobei ein Sensor jeweils ein Schutzfeld oder mehrere Schutzfelder überwachen kann. Der sichere Sensor nutzt vorzugsweise ein berührungsloses Wirkprinzip, insbesondere als optoelektronischer Sensor wie eine Kamera, eine 3D-Kamera oder ein Laserscanner, aber auch nicht-optisch wie beispielsweise Ultraschall oder Radar. Sicher und Sicherheit bedeuten wie in der gesamten Beschreibung, dass Maßnahmen ergriffen sind, um Fehler bis zu einem spezifizierten Sicherheitsniveau zu beherrschen beziehungsweise Vorschriften einer einschlägigen Sicherheitsnorm für Maschinensicherheit oder berührungslos wirkende Schutzeinrichtungen einzuhalten, von denen einleitend einige genannt sind.

Die Prüfvorrichtung ist mobil oder tragbar, kann vorzugsweise mit einer Hand geführt werden und ist dann als handgehalten bezeichnet. Sie weist definierte Abmessungen entsprechend einer zu erreichenden Schutzart auf. Ein Eindringen der Prüfvorrichtung in ein Schutzfeld wird, wie bei jedem Objekt entsprechender Abmessungen, als Schutzfeldverletzung erkannt beziehungsweise kann für Tests verwendet werden, ob das Schutzfeld richtig konfiguriert ist und der sichere Sensor tatsächlich darauf anspricht, einschließlich Bestimmung einer Reaktionszeit. Die zu erreichende Schutzart wird bevorzugt an Körperteilen festgemacht, beispielsweise Fingerschutz, Handschutz, Armschutz, Beinschutz oder Körperschutz, mit Abmessungen wie 14 mm, 20 mm, 40 mm, 55 mm, 70 mm, 120 mm, 150 mm oder 200 mm. Damit kann eine normkonforme Validierung der Schutzfelder vorgenommen werden.

Die Visualisierungsvorrichtung weist eine Anzeige und eine Steuer- und Auswertungseinheit auf, die dafür ausgebildet ist, das Schutzfeld auf der Anzeige darzustellen. Dazu wird beispielsweise eine graphische Repräsentation des Schutzfeldes mit Geometrieobjekten wie Polygonen, Kreisen oder räumlichen Entsprechungen erzeugt und angezeigt, die das Schutzfeld als Flächen oder Körper veranschaulichen. Die Visualisierungsvorrichtung ist mindestens mittelbar und vorzugsweise drahtlos über ein beliebiges an sich bekanntes Kommunikationsprotokoll mit dem sicheren Sensor verbunden, also direkt oder über ein weiteres Gerät wie eine übergeordnete Steuerung oder eine Cloud. Die Konfiguration des Schutzfeldes ist vorzugsweise über diese Verbindung, aber auch auf beliebige andere Weise, in der Visualisierungsvorrichtung bekannt, oder die Visualisierungsvorrichtung wird bereits für die Konfiguration eingesetzt und kennt deshalb die Schutzfelder. Die Visualisierungsvorrichtung ist vorzugsweise ein mobiles Endgerät wie ein Tablet, ein Smartphone oder eine VR-Brille.

Die Erfindung geht von dem Grundgedanken aus, die Validierung von Schutzfeldern mit der Visualisierungsvorrichtung zu unterstützen. Die mindestens mittelbare Verbindung zwischen Visualisierungsvorrichtung und sicherem Sensor übermittelt dafür jeweilige Schutzfeldverletzungen, und die Steuer- und Auswertungseinheit sorgt dafür, dass bei einem Schutzfeldeingriff eine Rückmeldung an einen Benutzer gegeben wird. Für die Rückmeldung wird je nach Ausführungsform nicht zwingend die Visualisierungsvorrichtung genutzt, und eine Rückmeldung der Visualisierungsvorrichtung erfolgt nicht zwingend über die Anzeige.

Die Erfindung hat den Vorteil, dass die Inbetriebnahme einer Sicherheitsanwendung erheblich vereinfacht und beschleunigt wird. Die Validierung kann vollständig direkt im abzusichernden Bereich mit unmittelbarem Bezug zum Raum, der Maschine und den Schutzfeldern erfolgen. Dadurch und wegen der direkten Rückmeldung wird die Validierung sehr viel intuitiver und kann mit weniger Expertenwissen und Erfahrung durchgeführt werden. Durch den Ablauf kann ein benutzerfreundliches Programm beziehungsweise eine App führen, die die Visualisierung leistet und die Rückmeldungen über Schutzfeldverletzungen gibt. Diese App kann zugleich die Validierung erläutern oder zu weiteren noch erforderlichen Validierungsschritten etwa eines noch nicht oder zu wenig getesteten Schutzfeldes auffordern. Auch regelmäßige Überprüfungen nach Betriebsphasen können von der App angefordert, angeleitet und protokolliert werden.

Die Visualisierungsvorrichtung ist bevorzugt in einem gemeinsamen Weltkoordinatensystem zu dem sicheren Sensor registriert. Damit kann sichergestellt werden, dass das Schutzfeld im richtigen Bezug zum Raum visualisiert wird. Es wird auf die einleitend genannten Dokumente EP 3 974 936 A1 und EP 4 000 815 A1 als Beispiele verwiesen, wie sich dieser richtige Raumbezug von Visualisierungsvorrichtung und Sensor verwirklichen lässt.

Die Visualisierungsvorrichtung weist bevorzugt eine Kamera auf und zeigt das Schutzfeld überlagert mit einem Echtbild an. Auch eine reine Schutzfeldvisualisierung unterstützt schon erheblich bei der Validierung, aber eine Überlagerung mit einem Echtbild erleichtert die intuitive Validierung der Schutzfelder noch weiter.

Die Visualisierungsvorrichtung ist bevorzugt dafür ausgebildet, als Rückmeldung an den Benutzer zu vibrieren. Eine haptische Rückmeldung macht das Schutzfeld wenigstens indirekt erfühlbar. Die haptische Rückmeldung führt eine weitere Sinnesdimension neben der Visualisierung der Schutzfelder ein. Eine binäre Information, also Vibrieren oder nicht Vibrieren, passt zu der ebenfalls binären Schutzfeldverletzung.

Die Steuer- und Auswertungseinheit ist bevorzugt dafür ausgebildet, als Rückmeldung an den Benutzer das Schutzfeld auf der Anzeige hervorzuheben. In dieser Ausführungsform erfolgt eine visuelle Rückmeldung. Beispielsweise leuchtet das verletzte Schutzfeld mit seinen Grenzbereichen oder vollflächig in einer anderen Farbe auf, vorzugsweise einer Signalfarbe wie gelb, orange oder rot, oder es blinkt. Als weitere Alternative zu einer visuellen Rückmeldung ist eine akustische Rückmeldung denkbar. Haptische, visuelle und/oder akustische Rückmeldungen können beliebig einzeln eingesetzt oder miteinander kombiniert werden, dies kann auch vom Benutzer angepasst werden.

Vorzugsweise wird der Ort des Schutzfeldeingriffs angezeigt. Das ist eine besondere visuelle Rückmeldung, die mit einer Hervorhebung des Schutzfeldes auf der Anzeige kombinierbar ist. Für die Validierung ist zunächst nur maßgeblich, ob das Schutzfeld verletzt ist oder nicht. Viele sichere Sensoren stellen überhaupt nur diese binäre Information außen bereit. Dennoch ist zumindest sensorintern eine feinere Ortsauflösung erforderlich, um die Schutzfeldverletzung zu erkennen, und somit der Ort des Schutzfeldeingriffs bekannt, und diese Information kann jedenfalls prinzipiell auch der Visualisierungsvorrichtung mitgeteilt werden. Für den Benutzer ergeben sich aus der Zusatzinformation des Ortes des Schutzfeldeingriffs weitere Hinweise, etwa ob noch weitere Validierungsschritte erforderlich sind, weil ein bestimmter Teil eines Schutzfeldes noch nicht getestet wurde, und auch, ob das angezeigte Schutzfeld tatsächlich dem überwachten Schutzfeld entspricht.

Das System weist bevorzugt einen Speicher auf, und die Steuer- und Auswertungseinheit ist dafür ausgebildet, Bilder von Schutzfeldeingriffen durch Ablegen in den Speicher zu dokumentieren. Der Speicher kann intern in der Visualisierungsvorrichtung, aber auch in dem sicheren Sensor, extern in einer angeschlossenen Recheneinheit oder beispielsweise in einer Cloud vorgesehen sein. Durch Ablegen von Bildern der Schutzfeldeingriffe kann die Validierung sehr einfach und vollständig dokumentiert werden. Es können Einzelbilder, aber auch Bildsequenzen oder Videos gespeichert werden. Die gespeicherten Bilder können als wichtiger Teil eines Protokolls der Validierung fungieren.

Die Bilder werden vorzugsweise um Dokumentationsinformationen ergänzt, insbesondere um einen Zeitstempel, eine Identifikation des sicheren Sensors, einen Namen der die Validierung durchführenden Person und/oder eine digitale Signatur. Durch solche Dokumentationsinformationen kann eine normgerechte Validierung und Protokollierung weiter unterstützt werden. Über den Zeitstempel kann nachvollzogen werden, dass die Validierung zu einem angemessenen Zeitpunkt und nicht beispielsweise schon vor vielen Jahren durchgeführt wurde. Mit einer Identifikation ist sichergestellt, dass die Validierung tatsächlich den in der Anwendung eingesetzten sicheren Sensor betrifft. Der Name des Benutzers sichert einen Verantwortlichen und ermöglicht beispielsweise eine Überprüfung, ob dieser Benutzer für eine Validierung qualifiziert und berechtigt war. Die gespeicherten Bilder und Dokumentationsinformationen können mit digitalen Signaturen und Zertifikaten authentifiziert und vor Manipulationen geschützt werden.

Die Prüfvorrichtung ist bevorzugt passiv ohne elektrische Komponenten ausgebildet, insbesondere als Prüfstab. Es handelt sich demnach um ein einfaches Objekt ohne eigene aktive Fähigkeiten, das äußerst kostengünstig ist. Die Prüfvorrichtung weist lediglich die von der Norm geforderten Abmessungen auf, und vorzugsweise eine bestimmte Farbe, denn ein Schutzfeld muss auf bestimmte Remissionseigenschaften wie ein helles und ein schwarzes Objekt ansprechen. Vorzugsweise ist es ein Prüfstab, weist also eine zylindrische Geometrie mit einem Durchmesser entsprechend der Schutzart auf.

Die Prüfvorrichtung weist bevorzugt eine Rückmeldungs-Einrichtung auf, die dafür ausgebildet ist, die Rückmeldung an den Benutzer mittels Vibration, einem optischen Signal und/oder einem akustischen Signal zu geben. In dieser Ausführungsform ist die Prüfvorrichtung aufwändiger und nicht lediglich passiv. Sie umfasst eine eigene Steuerungselektronik und Kommunikationsschnittstelle in Verbindung mit der Steuer- und Auswertungseinheit der Visualisierungsvorrichtung. Somit ist es nun die Prüfvorrichtung, die die Rückmeldung über Schutzfeldverletzungen gibt. Das ergibt einen noch unmittelbareren, besonders intuitiven Bezug zu dem testweisen Verletzen von Schutzfeldern im Rahmen der Validierung. Über die Art der Rückmeldung wird auf die analogen Möglichkeiten der Rückmeldung über die Visualisierungsvorrichtung verwiesen. Rückmeldungen können kombiniert an der Prüfvorrichtung und der Visualisierungsvorrichtung gegeben werden. Rein geometrisch betrachte kann auch eine aktive Prüfvorrichtung eine zylindrische Form haben, aber der Begriff Prüfstab soll einem einfachen passiven Prüfstab vorbehalten bleiben.

Die Visualisierungsvorrichtung weist bevorzugt eine Kamera auf, und die Steuer- und Auswertungseinheit ist dafür ausgebildet, die Prüfvorrichtung aufzunehmen und mittels Bildverarbeitung als solche zu identifizieren. Damit wird ein Bezug zu einer bestimmten Prüfvorrichtung hergestellt. Bei einer aktiven Prüfvorrichtung kann anstelle von Aufnahme und Bildverarbeitung die Kommunikationsverbindung genutzt werden.

Die Prüfvorrichtung weist bevorzugt einen optischen Code auf, und die Steuer- und Auswertungseinheit ist dafür ausgebildet, den Code zu lesen, insbesondere um die Prüfvorrichtung zu identifizieren und/oder um ein Programm zur Durchführung des Validierens eines Schutzfeldes zu installieren. Mit optischem Code ist ein Barcode oder ein entsprechender zweidimensionaler Code gemeint. Alternativ ist eine Texterkennung beispielsweise einer Artikelnummer oder sonstigen Identifikation denkbar. Über den optischen Code wird die Prüfvorrichtung als solche erkannt, und es können weitere Eigenschaften wie deren Abmessungen abgeleitet werden. Insbesondere kann der Code einen Verweis auf eine Quelle für den Bezug, insbesondere Download, zu einer App oder einem sonstigen Programm für die erfindungsgemäße Visualisierung und Validierung von Schutzfeldern enthalten, oder zu weiteren Hilfestellungen bei der Validierung.

Die Steuer- und Auswertungseinheit ist bevorzugt dafür ausgebildet, die Abmessungen der Prüfvorrichtung zu erkennen. Das kann durch Bildverarbeitung oder durch Identifizieren der Prüfvorrichtung beispielsweise über einen optischen Code oder eine Artikelnummer geschehen. Die Visualisierungsvorrichtung hat somit insbesondere die Information, für die Validierung welcher Schutzart die Prüfvorrichtung geeignet ist.

Die Steuer- und Auswertungseinheit ist bevorzugt dafür ausgebildet, eine Auflösung des Schutzfeldes anzuzeigen. Die Auflösung kann in einer metrischen Einheit oder in Klassen wie Fingerschutz oder Körperschutz angezeigt werden. Damit kann der Benutzer je Schutzfeld oder für Schutzfelder gemeinsam erkennen, welche Prüfvorrichtung welcher Abmessungen für die Validierung zu verwenden ist.

Die Steuer- und Auswertungseinheit ist bevorzugt dafür ausgebildet, eine Warnung an den Benutzer auszugeben, wenn die Abmessungen der Prüfvorrichtung für eine Auflösung des Schutzfeldes ungeeignet sind. In diesem Fall passen Prüfvorrichtung und Schutzfeld nicht zusammen. Eine zu grobe Prüfvorrichtung beispielsweise für Armschutz ist ungeeignet, einen Fingerschutz nachzuweisen, umgekehrt darf ein Schutzfeld für Körperschutz eine Prüfvorrichtung für Handschutz übersehen. Die Visualisierungsvorrichtung kann den Benutzer warnen und ihm einen Hinweis auf eine geeignete Prüfvorrichtung geben.

Das erfindungsgemäße Verfahren ist ein computerimplementiertes Verfahren, das hinsichtlich der Schutzfeldauswertungen in dem sicheren Sensor und hinsichtlich der Anzeige von Schutzfeldern und Koordinierung von Rückmeldungen über Schutzfeldverletzungen in der Visualisierungsvorrichtung insbesondere in Form einer App abläuft. Die Konfiguration der Schutzfelder geht der berührungslosen Absicherung voraus, sie erfolgt wegen der komplexen zu beachtenden Sicherheitsaspekte typischerweise manuell durch einen Sicherheitsexperten. Dabei sind aber automatische Unterstützungen möglich, wie Vorschläge für Schutzfelder und ein Konfigurationsprogramm mit graphischer Unterstützung beispielsweise ähnlich einem CAD-Programm, mit dem geometrische Objekte als Teile von Schutzfeldern in Bilder des Umfelds der Maschine eingepasst werden. Die Visualisierungsvorrichtung kann auch die Konfiguration von Schutzfeldern unterstützen.

Dabei wird vorzugsweise die Prüfvorrichtung von der Maschine geführt. Das ist besonders geeignet für einen Roboter als zu überwachende Maschine, der die Prüfvorrichtung beispielsweise an seiner Armspitze wie ein Werkzeug führt. Auf diese Weise können Schutzfelder in der unmittelbaren Umgebung um die Maschine abgetastet werden, solange sie in Reichweite der Maschine beziehungsweise des Roboters sind. Der Benutzer steht in sicherem Abstand oder leitet die Validierung sogar aus der Ferne und erhält dort über die Visualisierungsvorrichtung die Rückmeldungen über Schutzfeldverletzungen. Die Maschine kann dabei ein automatisches Programm abfahren, beispielsweise zumindest Teile ihres üblichen Arbeitsablaufs. Weiter besteht die Möglichkeit, dass der Benutzer die Prüfvorrichtung wie mit einer verlängerten Hand selbst führt, wobei sogar für eine besonders intuitive Ansteuerung Bewegungen der Visualisierungsvorrichtung auf die Prüfvorrichtung übertragen werden können.

Das erfindungsgemäße Verfahren kann auf ähnliche Weise weitergebildet werden wie das erfindungsgemäße System und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Übersichtsdarstellung eines Systems mit einem sicheren Sensor zur Überwachung eines Schutzfeldes, einer handgehaltenen Prüfvorrichtung zur Validierung des Schutzfeldes und einer Visualisierungsvorrichtung zur Anzeige des Schutzfeldes;
- Fig. 2: eine schematische Darstellung einer aktiven Prüfvorrichtung als Alternative zu einem passiven Prüfstab; und
- Fig. 3: eine weitere Veranschaulichung des Systems gemäß Figur 1 und der damit durchgeführten Validierung des Schutzfeldes.

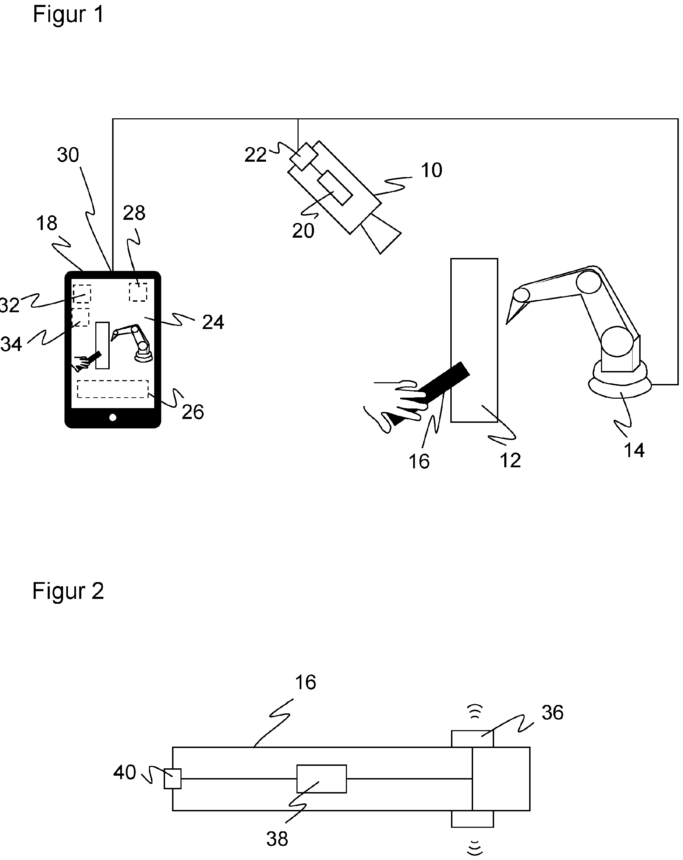

Figur 1 zeigt eine schematische Übersichtsdarstellung eines Systems mit einem sicheren Sensor 10 zur Überwachung eines Schutzfeldes 12, das eine Maschine 14 absichert, mit einer handgehaltenen Prüfvorrichtung 16 zur Validierung des Schutzfeldes 12 und mit einer Visualisierungsvorrichtung 18 zur Anzeige des Schutzfeldes 12. Vor Inbetriebnahme der Maschine 14 unter Absicherung durch das Schutzfeld 12 ist eine Validierung der Sicherheitsanwendung erforderlich. Dabei wird die Prüfvorrichtung 16 wiederholt an verschiedenen Stellen in das Schutzfeld 12 eingebracht und damit getestet, ob der sichere Sensor 10 den Schutzfeldeingriff erkennt und ein sicheres Absicherungssignal erzeugt, und mit welcher Reaktionszeit. Das Schutzfeld 12 ist mit einer bestimmten Auflösung konfiguriert, die typischerweise zu erkennenden Körperteilen entspricht. Die Prüfvorrichtung 16 weist dazu passende Abmessungen auf. Ein Schutzfeld 12 mit der Schutzart Fingerschutz beispielsweise wird mit einer fingerdicken Prüfvorrichtung 16 validiert, als normgerecht wird hierfür ein Durchmesser von 14 mm angesehen. Es sind nur ein sicherer Sensor 10 und nur ein Schutzfeld 12 gezeigt, ein sicherer Sensor 10 kann auch mehrere Schutzfelder überwachen, und es können mehrere sichere Sensoren eingesetzt sein.

Der sichere Sensor 10 ist in Figur 1 rein beispielhaft als Kamera dargestellt. Das ist eine bevorzugte Ausführungsform, wobei die Kamera eine normale Kamera oder eine 3D-Kamera sein kann. Für 3D-Kameras gibt es verschiedene zugrunde liegende Erfassungsprinzipien, wie eine Lichtlaufzeitkamera, eine Stereokamera oder eine Kamera mit einem Projektions- oder Lichtschnittverfahren. Weitere optoelektronische Alternativen sind nicht abschließend Laserscanner, Lichtgitter oder LIDAR-Sensoren insbesondere mit einer Schutzglocke für eine Armspitze eines Roboters, wie beschrieben etwa in DE 10 2015 112 656 A1, wobei auch nicht-optische Erfassungsprinzipien wie Radar, Ultraschall möglich sind. Derartige sichere Sensoren, die eine Schutzfeldüberwachung leisten, sind an sich bekannt und werden daher nicht im Detail beschrieben. Die Kamera als Beispiel eines sicheren Sensors 10 ist folglich nur ganz schematisch mit einer Kamerasteuerung 20 für die Schutzfeldauswertung und einem sicheren Ausgang 22 (OSSD, Output Signal Switching Device) zur Ausgabe eines sicherheitsgerichteten Ausgangssignals entsprechend einer Schutzfeldverletzung gezeigt. Im Betrieb der Maschine 14 sorgt das sicherheitsgerichtete Ausgangssignal über eine Verbindung des sicheren Ausgangs 22 zu der Maschine 14 dafür, dass eine Gefahr beseitigt wird, je nach Situation und Sicherheitsanwendung durch Maßnahmen wie Ausweichen, Verlangsamen, andere Arbeitsschritte oder Anhalten der Maschine 14.

Die Prüfvorrichtung 16 in Figur 1 ist als einfacher Prüfstab mit passendem Durchmesser ausgebildet, es handelt sich also um ein Stück Material wie Holz oder Kunststoff ohne jegliche elektronische Komponente lediglich mit den geforderten Abmessungen und vorzugsweise einem farbigen Anstrich für ein normgerechtes Remissionsverhalten. Das ist besonders kostengünstig. Später wird unter Bezugnahme auf die Figur 2 eine Alternative einer aktiven Prüfvorrichtung 16 vorgestellt.

Die Visualisierungsvorrichtung 18 ist als Smartphone dargestellt, was auch eine besonders bevorzugte Ausführungsform ist. Weitere mögliche Ausführungsformen sind ein Tablet, eine Smartwatch, eine AR-Brille (Augmented Reality) oder ein ähnliches mobiles Gerät, wobei ein größerer Computer wie ein Notebook weniger komfortabel, aber zumindest noch denkbar ist. Die Visualisierungsvorrichtung 18 weist eine Anzeige 24, eine Steuer- und Auswertungseinheit 26, eine optionale Kamera 28, eine Schnittstelle 30, einen optionalen Vibrationsalarm 32 und einen optionalen Laufsprecher 34 auf. Einige Elemente sind gestrichelt eingezeichnet, da sie sich im Geräteinneren beziehungsweise auf der Rückseite befinden.

Je nach Ausführung der Visualisierungsvorrichtung 18 und der Anzeige 24 ist eine Darstellung von 2D-Bilddaten oder 3D-Bilddaten möglich. Die Steuer- und Auswertungseinheit 26 umfasst mindestens einen digitalen Rechenbaustein, wie einen Mikroprozessor oder eine CPU (Central Processing Unit), ein FPGA (Field Programmable Gate Array), ein DSP (Digital Signal Processor), ein ASIC (Application-Specific Integrated Circuit), einen Kl-Prozessor, eine NPU (Neural Processing Unit), eine GPU (Graphics Processing Unit) oder dergleichen. Solche digitalen Rechenbausteine können im Übrigen auch für die Kamerasteuerung 22 verwendet werden. Die Schnittstelle 30 ist vorzugsweise für mindestens ein Kommunikationsprotokoll ausgebildet, vorzugsweise drahtlos wie etwa I/O-Link, Bluetooth, WLAN, Wi-Fi, 3G/4G/5G. Sie ist mit dem sicheren Ausgang 22 des sicheren Sensors 10 verbunden, wobei es hier anders als bei der Verbindung des sicheren Ausgangs 22 zu der Maschine 14 nicht um die sichere Übertragung des sicheren Absicherungssignals geht, sondern lediglich darum, dass die Visualisierungsvorrichtung 18 die Information über Schutzfeldverletzungen erhält. Somit kann die Verbindung in jeder Hinsicht indirekt sein und muss nicht einmal zwingend den sicheren Ausgang 22 einschließen. Die beiden gezeigten direkten Verbindungen können jeweils mittelbar sein, beispielsweise mit einer übergeordneten Steuerung als Zwischeninstanz. Die Schnittstelle 30 kann ferner die Visualisierungsvorrichtung 18 mit einer externem Recheneinheit verbinden, wie einen Computer beliebiger Bauart einschließlich Notebooks, Smartphones, Tablets, eine (Sicherheits-)steuerung, ein lokales Netzwerk, ein Edge-Device oder eine Cloud. Darüber kann die Steuer- und Auswertungseinheit 26 sich bei der Visualisierung und Validierung unterstützen lassen oder beispielsweise Bilddaten nach außen geben und gegebenenfalls dort archivieren.

Die Visualisierungsvorrichtung 18 visualisiert das Schutzfeld 12 auf der Anzeige 24 vorzugsweise in Echtzeit und vorzugsweise in Überblendung mit einem Bild der Kamera 28.

In der realen Szenerie ist das Schutzfeld 12 unsichtbar, da typischerweise der sichere Sensor 10 mit Licht außerhalb des sichtbaren Spektrums arbeitet beziehungsweise ein sicherer Sensor 10 mit einem anderen unsichtbaren Wirkprinzip eingesetzt ist. Selbst noch mit Licht im visuellen Spektrum wären vielleicht Auftreffpunkte des Lichts erkennbar, nicht aber das Schutzfeld 12 als solches, da ja das Licht nicht anhält und während der Propagation durch Luft allenfalls aufgrund von Staub und dann nicht ausgerechnet exklusiv im Schutzfeld 12 sichtbar würde.

Um das Schutzfeld 12 in der richtigen Pose, d.h. der richtigen Position und Orientierung darzustellen, muss die Steuer- und Auswertungseinheit 26 die Pose des sicheren Sensors 10 bezüglich der Visualisierungsvorrichtung 18 oder anders ausgedrückt eine Koordinatentransformation zwischen Koordinaten der Visualisierungsvorrichtung 18 und Koordinaten des sicheren Sensors 10 bestimmen, und zwar vorzugsweise in Echtzeit. Die dafür erforderlichen Schritte und Berechnungen sind nicht Gegenstand dieser Beschreibung, für eine solche Visualisierung wird beispielsweise auf die einleitend genannten Dokumente EP 3 974 936 A1 und EP 4 000 815 A1 verwiesen.

Figur 2 zeigt eine schematische Darstellung einer aktiven Prüfvorrichtung 16 als Alternative zu einem passiven Prüfstab. Die aktive Prüfvorrichtung 16 weist eine Validierungsanzeige 36, hier beispielhaft in Form von LEDs, eine Prüfsteuerung 38 und eine Schnittstelle 40 zur Verbindung mit der Visualisierungsvorrichtung 18 auf. Anstelle von LEDs oder in deren Ergänzung können ein Vibrationsalarm und/oder ein Lautsprecher der aktiven Prüfvorrichtung 16 vorgesehen sein. Die aktive Prüfvorrichtung 16 stellt somit Rückmeldungsmöglichkeiten zur Verfügung, die anstelle derjenigen der Visualisierungsvorrichtung 18 oder in deren Ergänzung während der Validierung des Schutzfeldes 12 verwendet werden. Die Schnittstelle 40 kann drahtlos sein, es ist aber auch denkbar, eine Kabelverbindung beispielsweise mittels USB herzustellen. In diesem Fall ist auch denkbar, dass die Prüfsteuerung 38 entfällt und deren Aufgaben von der Steuer- und Auswertungseinheit 26 übernommen werden. Besonders bevorzugt kann die Visualisierungsvorrichtung 18 an einer Halterung der Prüfvorrichtung 16 angebracht werden, so dass der Benutzer effektiv nur ein Gerät führen muss. Insbesondere überträgt sich dann ein Vibrationsalarm der Visualisierungsvorrichtung 18 in die passive Prüfvorrichtung 16. Eine solche Halterung ist im Übrigen auch für eine passive Prüfvorrichtung 16 vorstellbar.

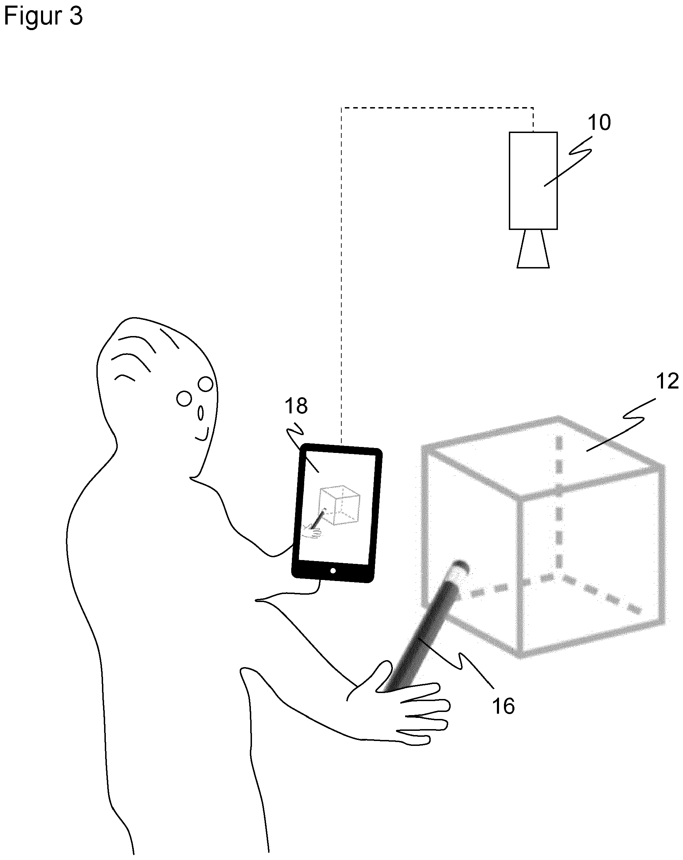

Figur 3 zeigt eine weitere Veranschaulichung des Systems gemäß Figur 1, in der vereinfachend nur noch der sichere Sensor 10, das davon überwachte Schutzfeld 12, die in der einen Hand eines Benutzers geführte Prüfvorrichtung 16 und die in der anderen Hand geführte Visualisierungsvorrichtung 18 ohne den jeweiligen inneren Aufbau gezeigt sind. Anhand dieser Illustrationen wird nun die Validierung des Schutzfeldes 12 erläutert. Durch die Validierung kann eine App führen, die in der Steuer- und Auswertungseinheit 26 auf der Visualisierungsvorrichtung 18 abläuft.

Der Benutzer verletzt nun wiederholt und gezielt das Schutzfeld 12, um eine sichere Erkennung von Schutzfeldverletzungen über das gesamte Schutzfeld 12 zu validieren. Dank der Visualisierung des Schutzfeld 12 auf der Visualisierungsvorrichtung 18 ist es sehr intuitiv möglich, dabei die geometrischen Grenzen des Schutzfeldes 12 auszutesten. Der Benutzer erhält von der Visualisierungsvorrichtung 18 und/oder einer aktiven Prüfvorrichtung 16 eine Rückmeldung, ob der sichere Sensor 10 jeweils eine Schutzfeldverletzung erkennt, und dies vorzugsweise in Echtzeit. Dabei sind ein oder mehrere Rückmeldungskanäle möglich, die über die Anzeige 24, den Vibrationsalarm 32, den Lautsprecher 34 oder entsprechende Einrichtungen der aktiven Prüfvorrichtung 16 verwirklicht sind und mittels derer sich der Benutzer jeweils davon überzeugen kann, dass die Schutzfelder richtig oder wo sie gegebenenfalls noch falsch parametriert sind.

Der Vibrationsalarm 32 wirkt als eine Art haptischer Prüfstab, der das Schutzfeld 12 praktisch fühlbar macht, auch wenn der Vibrationsalarm zumindest in Falle eines passiven Prüfstabs an der Visualisierungsvorrichtung 18 und nicht der Prüfvorrichtung 16 ausgelöst wird. Oben wurde auf die Möglichkeit hingewiesen, beides durch eine Halterung aneinander zu koppeln. Auf einem akustischen Rückmeldungskanal des Lautsprechers 34 sind einfache Tonsignale, aber auch komplexere Jingles oder Sprachmeldungen möglich. Die Anzeige 24 oder die Validierungsanzeige 36 können einfache visuelle Signale wie ein rotes Aufblinken geben. Die Anzeige 24 ist noch zu wesentlich komplexeren visuellen Rückmeldungen in der Lage, wie einem Blinken und/oder Farbwechsel des visualisierten Schutzfeldes, einem Rahmen um das Schutzfeld oder einer Visualisierung des genauen Eingriffsorts in das Schutzfeld. Außerdem sind Textmeldungen denkbar. Alle diese Rückmeldungen können einzeln oder in beliebigen Kombinationen gegeben werden.

In einer bevorzugten Ausführungsform wird zu dem Schutzfeld 12 dessen Auflösung oder Schutzart angezeigt, sei es als Farbcode oder als Text wie "Fingerschutz" oder "14 mm". Damit weiß der Benutzer, welche Prüfvorrichtung 16 für die Validierung zu verwenden ist. Ferner ist vorstellbar, dass die Visualisierungsvorrichtung 18 die Prüfvorrichtung 16 und insbesondere deren Abmessungen und damit Eignung für welche Schutzart selbsttätig erkennt. Dies kann über Bildverarbeitung und Ausmessen oder durch Erfassen einer Codierung der Prüfvorrichtung 16 erreicht werden. Unter einer Codierung ist dabei im engeren Sinne ein optischer Code wie ein Barcode oder ein zweidimensionaler Code zu verstehen, es kann aber auch in einem weiteren Sinne eine Artikelnummer oder eine beliebige sonstige Identifikation erkannt werden. In Kenntnis der Abmessungen der Prüfvorrichtung 16 kann die Visualisierungsvorrichtung 18 auch prüfen, ob Schutzfeld 12 und Prüfvorrichtung 16 zueinander passen. Dann kann von der Visualisierungsvorrichtung 18 gegebenenfalls eine Warnung ausgegeben werden, beispielsweise wenn mit einer Prüfvorrichtung 16 für Fingerschutz ein Schutzfeld 12 für Armschutz validiert werden soll, und insbesondere eine geeignete Prüfvorrichtung 16 oder möglicherweise auch eine Anpassung des Schutzfeldes 12 vorgeschlagen werden, wobei letzteres natürlich mit der Sicherheitsanwendung verträglich sein muss.

Die angesprochene Codierung der Prüfvorrichtung 16 und deren Erfassung schaffen eine gewisse Kopplung zwischen Visualisierungsvorrichtung 18 und Prüfvorrichtung 16. Damit wird ermöglicht, zusätzliche Informationen über die Prüfvorrichtung 16 zuzuordnen oder beispielsweise über eine Cloud in Erfahrung zu bringen. So kann die Verwendung eines Originalprodukts überprüft werden, um eine normgerechte Validierung sicherzustellen. Ferner ist denkbar, dass der Code einen Link oder dergleichen enthält, über den die Visualisierungsvorrichtung 18 Zugriff auf ein Programm oder eine App erhält, mit der die Validierung durchgeführt wird. Im Falle einer aktiven Prüfvorrichtung wird diese Kopplung vorzugsweise über die Schnittstelle 40 etabliert.

Die Visualisierungsvorrichtung 18 kann die Validierung dokumentieren, so dass die von den Sicherheitsnormen vorgeschriebene Validierung vor Inbetriebnahme später nachgewiesen und überprüft werden kann. Dazu werden Bilder und/oder Videos von Schutzfeldeingriffen mit der Prüfvorrichtung 16 gespeichert, sei es intern in der Visualisierungsvorrichtung 18 oder extern beispielsweise in einer Cloud. Das Bildmaterial kann mit Zusatzinformationen wie Zeitstempeln, Ortsdaten, insbesondere GPS-Daten, dem Namen des die Validierung durchführenden Benutzers, Serien- oder Artikelnummern des sicheren Sensors 10, der Visualisierungsvorrichtung 18 und/oder der Prüfvorrichtung 16 versehen werden. Durch eine digitale Signatur beziehungsweise ein Zertifikat können die archivierten Daten authentifiziert und vor nachträglicher Manipulation geschützt werden.

Damit wird es ein Leichtes, die für eine Abnahme und Inbetriebnahme geforderten Protokollpflichten zu erfüllen.

## Patentansprüche

1. System mit mindestens einem sicheren Sensor (10) zur Überwachung mindestens eines Schutzfeldes (12), einer mobilen, insbesondere handgehaltenen Prüfvorrichtung (16) zum Validieren des Schutzfeldes (12) und einer Visualisierungsvorrichtung (18) zum Anzeigen des Schutzfeldes (12), wobei die Prüfvorrichtung (16) vorgegebene Abmessungen entsprechend einer zu erreichenden Schutzart aufweist und der sichere Sensor (10) dafür ausgebildet ist, ein Eindringen der Prüfvorrichtung (16) in das Schutzfeld (12) als Schutzfeldverletzung zu erkennen und daraufhin ein Absicherungssignal auszugeben und wobei die Visualisierungsvorrichtung (18) mindestens mittelbar mit dem sicheren Sensor (10) verbunden ist und eine Anzeige (24) und eine Steuer- und Auswertungseinheit (26) aufweist, die dafür ausgebildet ist, das Schutzfeld (12) auf der Anzeige (24) darzustellen,
wobei die Visualisierungsvorrichtung (18) derart mit dem sicheren Sensor (10) verbunden ist, dass eine Schutzfeldverletzung übermittelt wird, und **dadurch gekennzeichnet, dass** die Steuer- und Auswertungseinheit (26) dafür ausgebildet ist, bei einem Schutzfeldeingriff eine haptische, akustische und/oder visuelle Rückmeldung an einen Benutzer zu geben, wobei die visuelle Rückmeldung ein Hervorheben des Schutzfeldes (12) auf der Anzeige (24) aufweist, insbesondere durch Aufleuchten des verletzten Schutzfeldes in seinen Grenzbereichen oder vollflächig in einer anderen Farbe, durch Blinken, einen Rahmen um das Schutzfeld und/oder einen Farbwechsel.

2. System nach Anspruch 1,
wobei die Visualisierungsvorrichtung (18) in einem gemeinsamen Weltkoordinatensystem zu dem sicheren Sensor (10) registriert ist, wobei insbesondere die Visualisierungsvorrichtung (18) eine Kamera (28) aufweist und das Schutzfeld (12) überlagert mit einem Echtbild anzeigt.

3. System nach Anspruch 1 oder 2,
wobei die Visualisierungsvorrichtung (18) dafür ausgebildet ist, als Rückmeldung an den Benutzer zu vibrieren.

4. System nach einem der vorhergehenden Ansprüche,
wobei die Steuer- und Auswertungseinheit (26) dafür ausgebildet ist, als Rückmeldung an den Benutzer einen Ort des Schutzfeldeingriffs anzuzeigen.

5. System nach einem der vorhergehenden Ansprüche,
das einen Speicher aufweist, und wobei die Steuer- und Auswertungseinheit (26) dafür ausgebildet ist, Bilder von Schutzfeldeingriffen durch Ablegen in den Speicher zu dokumentieren.

6. System nach Anspruch 5,
wobei die Bilder um Dokumentationsinformationen ergänzt werden, insbesondere um einen Zeitstempel, eine Identifikation des sicheren Sensors (10), einen Namen der die Validierung durchführenden Person und/oder eine digitale Signatur.

7. System nach einem der vorhergehenden Ansprüche,
wobei die Prüfvorrichtung (16) passiv ohne elektrische Komponenten ausgebildet ist, insbesondere als Prüfstab.

8. System nach einem der Ansprüche 1 bis 6,
wobei die Prüfvorrichtung (16) eine Rückmeldungs-Einrichtung (36) aufweist, die dafür ausgebildet ist, die Rückmeldung an den Benutzer mittels Vibration, einem optischen Signal und/oder einem akustischen Signal zu geben.

9. System nach einem der vorhergehenden Ansprüche,
wobei die Visualisierungsvorrichtung (18) eine Kamera (28) aufweist und die Steuer- und Auswertungseinheit (26) dafür ausgebildet ist, die Prüfvorrichtung (16) aufzunehmen und mittels Bildverarbeitung als solche zu identifizieren.

10. System nach einem der vorhergehenden Ansprüche,
wobei die Prüfvorrichtung (16) einen optischen Code aufweist und die Steuerund Auswertungseinheit (26) dafür ausgebildet ist, den Code zu lesen, insbesondere um die Prüfvorrichtung (16) zu identifizieren und/oder um ein Programm zur Durchführung des Validierens eines Schutzfeldes (12) zu installieren.

11. System nach einem der vorhergehenden Ansprüche,
wobei die Steuer- und Auswertungseinheit (26) dafür ausgebildet ist, die Abmessungen der Prüfvorrichtung (16) zu erkennen.

12. System nach einem der vorhergehenden Ansprüche,
wobei die Steuer- und Auswertungseinheit (26) dafür ausgebildet ist, eine Auflösung des Schutzfeldes (12) anzuzeigen.

13. System nach Anspruch 11 oder 12,
wobei die Steuer- und Auswertungseinheit (26) dafür ausgebildet ist, eine Warnung an den Benutzer auszugeben, wenn die Abmessungen der Prüfvorrichtung (16) für eine Auflösung des Schutzfeldes (12) ungeeignet sind.

14. Verfahren zum Validieren von Schutzfeldern (12) zum Absichern einer Maschine (14) mit einer mobilen, insbesondere handgehaltenen Prüfvorrichtung (16) vorgegebener Abmessungen entsprechend einer zu erreichenden Schutzart, bei dem mindestens ein sicherer Sensor (10) mindestens ein Schutzfeld (12) überwacht, somit ein Eindringen der Prüfvorrichtung (16) in das Schutzfeld (12) als Schutzfeldverletzung erkennt und daraufhin ein Absicherungssignal ausgibt und wobei eine Visualisierungsvorrichtung (18) mindestens mittelbar mit dem sicheren Sensor (10) verbunden ist und das Schutzfeld (12) auf einer Anzeige (24) der Visualisierungsvorrichtung (18) darstellt,
wobei die Visualisierungsvorrichtung (18) derart mit dem sicheren Sensor (10) verbunden ist, dass eine Schutzfeldverletzung übermittelt wird, und **dadurch gekennzeichnet, dass** bei einem Schutzfeldeingriff eine haptische, akustische und/oder visuelle Rückmeldung an einen Benutzer gibt, wobei die visuelle Rückmeldung ein Hervorheben des Schutzfeldes (12) auf der Anzeige (24) aufweist, insbesondere durch Aufleuchten des verletzten Schutzfeldes in seinen Grenzbereichen oder vollflächig in einer anderen Farbe, durch Blinken, einen Rahmen um das Schutzfeld und/oder einen Farbwechsel.

15. Verfahren nach Anspruch 14,
wobei die Prüfvorrichtung (16) von der Maschine (14) geführt wird, insbesondere von einer als Roboter ausgebildeten Maschine (14).

## Claims

1. A system having at least one safe sensor (10) for monitoring at least one protected field (12), having a mobile, in particular hand-held, test device (16) for validating the protected field (12), and having a visualization device (18) for displaying the protected field (12), wherein the test device (16) has predefined dimensions corresponding to a type of protection to be achieved and the safe sensor (10) is configured to recognize a penetration of the test device (16) into the protected field (12) as a protected field infringement and to thereupon output a safeguarding signal, and wherein the visualization device (18) is at least indirectly connected to the safe sensor (10) and has a display (24) and a control and evaluation unit (26) that is configured to present the protected field (12) on the display (24),
wherein the visualization device (18) is connected to the safe sensor (10) such that a protected field infringement is transmitted, and
**characterized in that**
the control and evaluation unit (26) is configured to provide haptic, acoustic, and/or visual feedback to a user on a protected field intrusion, with the visual feedback comprising a highlighting of the protected field (12) on the display (24), in particular by illuminating the infringed protected field in its boundary zones or over the full area in a different color, by flashing, by a frame around the protected field, and/or by a change of color.

2. A system in accordance with claim 1,
wherein the visualization device (18) is registered to the safe sensor (10) in a common global coordinate system, with in particular the visualization device (18) having a camera (28) and displaying the protected field (12) superposed by a real image.

3. A system in accordance with claim 1 or claim 2,
wherein the visualization device (18) is configured to vibrate as feedback to the user.

4. A system in accordance with any one of the preceding claims,
wherein the control and evaluation unit (26) is configured to display a location of the protected field intrusion as feedback to the user.

5. A system in accordance with any one of the preceding claims
that has a memory and wherein the control and evaluation unit (26) is configured to document images of protected field intrusions by storing in the memory.

6. A system in accordance with claim 5,
wherein the images are supplemented by documentation information, in particular by a time stamp, an identification of the safe sensor (10), a name of the person carrying out the validation, and/or a digital signature.

7. A system in accordance with any one of the preceding claims,
wherein the test device (16) is configured as passive without any electrical components, in particular as a test bar.

8. A system in accordance with any one of the claims 1 to 6,
wherein the test device (16) has a feedback device (36) that is configured to provide the feedback to the user by means of vibration, an optical signal, and/or an acoustic signal.

9. A system in accordance with any one of the preceding claims,
wherein the visualization device (18) has a camera (28) and the control and evaluation unit (26) is configured to record the test device (16) and to identify it as such by means of image processing.

10. A system in accordance with any one of the preceding claims,
wherein the test device (16) has an optical code and the control and evaluation unit (26) is configured to read the code, in particular to identify the test device (16) and/or to install a program to carry out the validation of a protected field (12).

11. A system in accordance with any one of the preceding claims,
wherein the control and evaluation unit (26) is configured to recognize the dimensions of the test device (16).

12. A system in accordance with any one of the preceding claims,
wherein the control and evaluation unit (26) is configured to display a resolution of the protected field (12).

13. A system in accordance with claim 11 or claim 12,
wherein the control and evaluation unit (26) is configured to output a warning to the user when the dimensions of the test device (16) are unsuitable for a resolution of the protected field (12).

14. A method of validating protected fields (12) for safeguarding a machine (14) having a mobile, in particular hand-held, test device (16) of predefined dimensions corresponding to a type of protection to be achieved in which method at least one safe sensor (10) monitors at least one protected field (12), thus recognizes a penetration of the test device (16) into the protected field (12) as a protected field infringement, and thereupon outputs a safeguarding signal, and wherein a visualization device (18) is connected at least indirectly to the safe sensor (10) and presents the protected field (12) on a display (24) of the visualization device (18),
wherein the visualization device (18) is connected to the safe sensor (10) such that a protected field infringement is transmitted, and
**characterized in that**
a haptic, acoustic, and/or visual feedback is provided to a user on a protected field intrusion, with the visual feedback comprising a highlighting of the protected field (12) on the display (24), in particular by illuminating the infringed protected field in its boundary zones or over the full area in a different color, by flashing, by a frame around the protected field, and/or by a change of color.

15. A method in accordance with claim 14,
wherein the test device (16) is guided by the machine (14), in particular by a machine (14) formed as a robot.

## Revendications

1. Système comprenant au moins un capteur sécurisé (10) destiné à surveiller au moins un champ de protection (12), un dispositif de contrôle (16) mobile, en particulier tenu à la main, destiné à valider le champ de protection (12), et un dispositif de visualisation (18) destiné à afficher le champ de protection (12), le dispositif de contrôle (16) présentant des dimensions prédéfinies correspondant à un type de protection à atteindre, et le capteur sécurisé (10) étant conçu pour reconnaître une pénétration du dispositif de contrôle (16) dans le champ de protection (12) en tant que violation du champ de protection et pour ensuite émettre un signal de sécurisation, et le dispositif de visualisation (18) étant relié au moins indirectement au capteur sécurisé (10) et présentant un affichage (24) et une unité de commande et d'évaluation (26) qui est conçue pour représenter le champ de protection (12) sur l'affichage (24),
dans lequel
le dispositif de visualisation (18) est relié au capteur sécurisé (10) de manière à transmettre une violation du champ de protection,
**caractérisé en ce que** l'unité de commande et d'évaluation (26) est conçue pour fournir un retour d'information haptique, sonore et/ou visuel à un utilisateur en cas d'intrusion dans le champ de protection, sachant que le retour d'information visuel constitue une mise en évidence du champ de protection (12) sur l'affichage (24), en particulier par l'éclairage du champ de protection violé en une autre couleur dans ses zones limites ou sur toute sa surface, par un clignotement, par un cadre posé autour du champ de protection et/ou par un changement de couleur.

2. Système selon la revendication 1,
dans lequel le dispositif de visualisation (18) est enregistré dans un système de coordonnées mondial commun relatif au capteur sécurisé (10), en particulier, le dispositif de visualisation (18) comprenant une caméra (28) et affichant le champ de protection (12) en superposition avec une image réelle.

3. Système selon la revendication 1 ou 2,
dans lequel le dispositif de visualisation (18) est conçu pour vibrer à titre de retour d'information à l'utilisateur.

4. Système selon l'une des revendications précédentes,
dans lequel l'unité de commande et d'évaluation (26) est conçue pour afficher, à titre de retour d'information à l'utilisateur, un lieu d'intrusion dans le champ de protection.

5. Système selon l'une des revendications précédentes,
comprenant une mémoire, l'unité de commande et d'évaluation (26) étant conçue pour documenter des images d'intrusions dans le champ de protection en les déposant dans la mémoire.

6. Système selon la revendication 5,
dans lequel les images sont complétées par des informations de documentation, en particulier par un horodatage, une identification du capteur sécurisé (10), un nom de la personne effectuant la validation et/ou par une signature numérique.

7. Système selon l'une des revendications précédentes,
dans lequel le dispositif de contrôle (16) est réalisé passif, sans composants électriques, en particulier sous la forme d'une barre de test.

8. Système selon l'une des revendications 1 à 6,
dans lequel le dispositif de contrôle (16) comprend un dispositif de retour d'information (36) conçu pour fournir le retour d'information à l'utilisateur au moyen d'une vibration, d'un signal optique et/ou d'un signal sonore.

9. Système selon l'une des revendications précédentes,
dans lequel le dispositif de visualisation (18) comprend une caméra (28), et l'unité de commande et d'évaluation (26) est conçue pour enregistrer le dispositif de contrôle (16) et l'identifier comme tel au moyen d'un traitement d'image.

10. Système selon l'une des revendications précédentes,
dans lequel le dispositif de contrôle (16) présente un code optique, et l'unité de commande et d'évaluation (26) est conçue pour lire le code, en particulier pour identifier le dispositif de contrôle (16) et/ou pour installer un programme pour mettre en œuvre la validation d'un champ de protection (12).

11. Système selon l'une des revendications précédentes,
dans lequel l'unité de commande et d'évaluation (26) est conçue pour reconnaître les dimensions du dispositif de contrôle (16).

12. Système selon l'une des revendications précédentes,
dans lequel l'unité de commande et d'évaluation (26) est conçue pour afficher une résolution du champ de protection (12).

13. Système selon la revendication 11 ou 12,
dans lequel l'unité de commande et d'évaluation (26) est conçue pour émettre un avertissement à l'utilisateur si les dimensions du dispositif de contrôle (16) ne sont pas appropriées pour une résolution du champ de protection (12).

14. Procédé de validation de champs de protection (12) pour sécuriser une machine (14) avec un dispositif de contrôle (16) mobile, en particulier tenu à la main, de dimensions prédéfinies correspondant à un type de protection à atteindre, dans lequel au moins un capteur sécurisé (10) surveille au moins un champ de protection (12), reconnaît ainsi une pénétration du dispositif de contrôle (16) dans le champ de protection (12) en tant que violation du champ de protection et émet ensuite un signal de sécurisation, et un dispositif de visualisation (18) est relié au moins indirectement au capteur sécurisé (10) et représente le champ de protection (12) sur un affichage (24) du dispositif de visualisation (18),
dans lequel
le dispositif de visualisation (18) est relié au capteur sécurisé (10) de manière à transmettre une violation du champ de protection,
**caractérisé en ce que**
un retour d'information haptique, sonore et/ou visuel est fourni en cas d'intrusion dans le champ de protection, le retour d'information visuel constitue une mise en évidence du champ de protection (12) sur l'affichage (24), en particulier par l'éclairage du champ de protection violé en une autre couleur dans ses zones limites ou sur toute sa surface, par un clignotement, par un cadre posé autour du champ de protection et/ou par un changement de couleur.

15. Procédé selon la revendication 14,
dans lequel le dispositif de contrôle (16) est guidé par la machine (14), en particulier par une machine (14) conçue comme un robot.
